# FASCICULE DE BREVET EUROPEEN

(11) **EP 1 514 891 B1**
(45) Date de publication et mention de la délivrance du brevet: **06.08.2008**
(21) Numéro de dépôt: 04292106.4
(22) Date de dépôt: 30.08.2004
(51) Int. Cl.: C08J 3/03, C08L 67/04, C08L 1/08

(54) **Dispersions aqueuses d'au moins un polymère biodégradable**
Wässrige Dispersionen aus mindestens einem bioabbaubaren Polymer
Aqueous dispersions of at least one biodegradable polymer

(30) Priorité: 12.09.2003 FR 0310743
(43) Date de publication de la demande: 16.03.2005
(73) Titulaire: Roquette Frères, 62136 Lestrem (FR)
(72) Inventeur: Serpelloni, Michel, 62660 Beuvry les Bethune (FR); Mentink, Léon, 59100 Roubaix (FR); Bernaerts, Joêl, 62122 Labeuvriere (FR)
(74) Mandataire: Boulinguiez, Didier

(56) Documents cités:
- EP-A- 1 302 502
- WO-A-97/49762
- US-A- 4 502 888
- US-A1- 2001 024 631

## Description

La présente invention est relative à des dispersions aqueuses d'au moins un polymère biodégradable comprenant une phase organique dispersée dans une phase aqueuse dispersante et dépourvues de composés organiques volatils, dont la phase organique dispersée comprend au moins un agent réducteur de viscosité.

L'invention concerne plus particulièrement des dispersions aqueuses d'au moins un polymère biodégradable dans lesquelles l'agent réducteur de viscosité est caractérisé par son paramètre de solubilité, sa capacité à former des liaisons hydrogènes et par son rapport pondéral spécifique avec ledit polymère biodégradable.

Au sens de l'invention, on entend par « dispersions aqueuses de polymères » ou « latex », des dispersions colloïdales de polymères dans une phase aqueuse, i.e. des dispersions de microparticules de polymères en suspension dans une phase aqueuse, parfois aussi appelées suspensions ou émulsions de polymères.

Au sens de l'invention, on entend par « polymère biodégradable » un polymère destiné à être dégradé sous l'action de microorganismes, notamment par des microorganismes du sol, mais aussi sous l'action d'agents naturels, notamment l'eau.

Au sens de l'invention, on entend également par « agent réducteur de viscosité » (ou « plastifiant ») un solvant organique lourd qui, incorporé aux polymères, détruit au moins partiellement les interactions entre les chaînes responsables de la haute viscosité et de la cohésion mécanique desdits polymères.

L'agent réducteur de viscosité est caractérisé par son paramètre de solubilité et sa capacité à former des liaisons hydrogènes.

Les paramètres de solubilité (dits de HILDEBRAND) traduisent en fait la force d'attraction existante entre les molécules du solvant et du polymère, et plus particulièrement la variation de densité d'énergie de cohésion du solvant, i.e. l'énergie nécessaire pour le vaporiser. Les unités du paramètre de solubilité sont alors exprimées à 25°C et en (J.cm⁻³)^{0,5} ou en (MPa)^{1/2} (où 1 (J.cm⁻³)^{0,5} = 1 (MPa)^{1/2}).

Par ailleurs, l'agent réducteur de viscosité est également caractérisé par sa capacité (faible, moyenne ou forte) à former des liaisons hydrogènes, selon le paramètre de HANSEN (exprimé également à 25°C et en (J.cm⁻³)^{0,5}).

Au sens de l'invention, on entend par « composé organique volatil », tout composé organique ayant une pression de vapeur de 13,3 Pa ou plus à une température de 25°C ou ayant une volatilité correspondante dans des conditions données.

L'agent réducteur de viscosité retenu au sens de l'invention n'est donc pas un composé organique volatil.

L'absence de composé organique volatil dans les dispersions aqueuses de l'invention se traduit par une teneur en composé organique volatil qui ne dépasse pas celle des ingrédients desdites dispersions aqueuses, i.e. au plus égale à 5.000 ppm, de préférence d'au plus 1.000 ppm, et plus préférentiellement encore d'au plus 500 ppm.

La présente invention concerne également le procédé de fabrication de ces dispersions aqueuses particulières.

Les dispersions aqueuses de polymères sont utilisées dans des domaines aussi variés que les adhésifs, les encres, les peintures, les systèmes d'enrobage de semences ou d'engrais, le couchage du papier, les films, les supports de tapis ou les mousses de matelas.

Mais elles présentent également des intérêts dans les industries pharmaceutiques (pour la délivrance de médicaments, pour les kits d'essais médicaux, pour les gants chirurgicaux) ou dans la cosmétique.

La fabrication classique des dispersions aqueuses de polymères, en remplacement des latex naturels, repose principalement sur des procédés de polymérisation directe en émulsion de monomères synthétiques de type styrène, éthylène, propylène, alcool vinylique ou acrylamide.

Ces émulsions de polymères synthétiques sont par exemple mises en oeuvre, par la technique d'enduction (dite de « casting »), pour le revêtement de supports de type carton ou papier afin de leur communiquer des propriétés de résistance à l'eau.

Leur application en couche mince sur la face interne des emballages en papier, notamment pour le lait ou les jus de fruits, a conduit cependant à l'obtention d'emballages difficilement recyclables et biodégradables lors des traitements par enfouissement dans le sol.

Afin de remédier à ce problème, des dispersions aqueuses de polymères préparées à partir de polymères biodégradables ont alors fait l'objet de recherches et de développement intensifs.

Des premières techniques ont consisté à utiliser les polymères biodégradables en tant que tels, par exemple à l'état fondu, ce qui nécessite de les travailler à haute température, avec l'inconvénient de préparer des films trop épais, ou à les mettre en oeuvre dans des techniques d'extrusion/étirement pour générer des films plus minces, techniques cependant coûteuses et consommatrices de matières et d'énergie.

Dans la demande de brevet JP 4-334.448, pour la fabrication de films résistant à l'eau, on procède plutôt à la pulvérisation à la surface du papier d'un polymère d'acide lactique en solution dans un solvant organique volatil ou à l'immersion dudit papier dans un solvant organique contenant l'acide polylactique.

Si le choix d'un polymère d'acide lactique à la place d'une résine synthétique participe à la résolution du problème de biodégradabilité des polymères et par voie de conséquence des emballages, elle n'est pas totalement satisfaisante.

En effet, le recours en tant que solvants à des composés organiques volatils pour déposer l'acide polylactique ou ses dérivés en surface d'un substrat reste synonyme de très grande complexité de manipulation du fait des précautions que la toxicité du solvant organique volatil oblige à respecter (solvants inflammables, risques d'explosion, d'inhalation par les travailleurs, de pollution de l'environnement...).

De plus, il est connu que cette solution n'est pas technologiquement satisfaisante, car la technique de filmification par dépôt en surface d'une solution de polymères biodégradables préparée à partir de polymères d'acide lactique est encore pénalisée par les difficultés rencontrées pour obtenir des pellicules suffisamment résistantes à l'eau par rapport à celles préparées à partir de polymères synthétiques.

Pour tenter de résoudre ces difficultés de résistance à l'eau, il est décrit dans la demande de brevet JP 10-101911 l'obtention d'une pellicule biodégradable résistante à partir cette fois d'une émulsion consistant en la dispersion en fins globules émulsifiés d'acide polylactique contenant un émulsifiant anionique.

Cependant, cette solution technique présente l'inconvénient de nécessiter toujours l'usage d'un solvant organique volatil de type chlorure de méthylène, chloroforme, dioxane ou acétonitrile, pour réaliser la dispersion en émulsion du polymère d'acide lactique.

La demande de brevet JP 2001-11294 propose quant à elle des dispersions aqueuses biodégradables, où l'on trouve, à côté d'une résine biodégradable de type polyester aliphatique, un mélange d'un composé macromoléculaire cationique de poids moléculaire (PM) d'au moins 300.000 ou d'un composé macromoléculaire anionique de PM d'au moins 1.000.000 avec en plus de l'alcool polyvinylique (PVA).

L'inconvénient ici est l'utilisation d'un mélange de composés macromoléculaires cationiques ou anioniques / PVA non biodégradable. Par ailleurs, il est également proposé d'ajouter d'autres agents, tels des agents épaississants, des correcteurs de fluidité...

Il est également toujours obligatoire d'utiliser en tant que solvant, un solvant organique volatil en large excès, ce qui nécessite de mettre en oeuvre une étape subséquente consistant à chasser sous vide poussé une bonne partie de ce solvant organique. Il est par ailleurs connu qu'il n'est pas possible d'obtenir une émulsion exempte de solvant, au risque de casser l'émulsion.

Cette émulsion biodégradable n'est guère satisfaisante, étant donné le nombre de manipulations à réaliser et le fait qu'il faille respecter un équilibre des composants très précis pour l'obtention d'un produit industriellement intéressant.

Enfin, ces dispersions aqueuses biodégradables ne présentent qu'une stabilité limitée, à savoir d'au plus 1 à 2 mois à 20°C ou à 40°C, et de ce fait elles ne sont pas utilisables pour un bon nombre d'applications où les durées de stabilité requises sont plus longues.

La demande de brevet JP 2001-303478 décrit quant à elle un procédé de fabrication de feuilles de papier revêtues d'une couche de matière plastique biodégradable. Il est recherché à communiquer au papier des propriétés de résistance mécanique, d'imprimabilité et de résistance à l'eau, mais également de stabilité dans le temps. La solution préconisée consiste à appliquer une émulsion plastique biodégradable sur une feuille de papier support en vue d'y déposer une couche de matière plastique biodégradable.

Les émulsions de matières plastiques biodégradables sont préparées en solubilisant un polymère d'acide lactique dans un composé organique volatil, i.e. l'acétate d'éthyle, et en ajoutant ensuite un émulsifiant, de type sels d'acides gras, éthers carboxylates, alcényl succinates, alkylsulfates...

Cette solution est lourde et complexe, et nécessite l'ajout de nombreux ingrédients, tant dans la phase organique que dans la phase aqueuse dispersante, et toujours en présence de solvants organiques volatils.

En conclusion, toutes les demandes de brevet évoquées ci-dessus présentent trois inconvénients majeurs :
- il est indispensable d'avoir recours à des solvants organiques volatils pour solubiliser les polymères biodégradables, quel que soit le procédé de préparation mis en oeuvre, ce qui ne permet donc pas d'échapper aux problèmes de toxicité, de surcoûts, de complexité des étapes mises en oeuvre, à l'obligation d'installer des dispositifs de prévention des fuites, des dispositifs antidéflagrations ou de récupération des solvants organiques volatils et à leur inévitable impact sur l'environnement,
- le recours aux solvants organiques volatils ne peut conduire qu'à des dispersions aqueuses de faible matière sèche (MS),
- il est nécessaire d'ajouter différents agents stabilisants, émulsifiants, épaississants... dont la nature synthétique est préjudiciable à la biodégradabilité de la dispersion aqueuse obtenue.

Pour illustrer les tentatives de l'état de la technique pour remédier aux problèmes d'utilisation de solvant organique volatil, la demande de brevet EP 1.302.502 propose un procédé de fabrication d'une dispersion de polyester biodégradable à haute matière sèche (MS) et à haute viscosité. Le procédé consiste à traiter à haute température et à haute pression, par extrusion, un mélange de polyesters biodégradables à l'état fondu avec un émulsifiant aqueux présentant une certaine tension de surface et avec certains additifs, de manière à obtenir une dispersion aqueuse ayant une MS d'au moins 40 % et une viscosité d'au moins 1.000 mPa.s et de préférence comprise entre 1.500 et 10.000 mPa.s. Le procédé consiste à fondre les polyesters biodégradables dans l'extrudeur, puis à y introduire l'émulsifiant aqueux en aval du mélange fondu. Le mélange est ensuite malaxé à une température inférieure ou égale à 100°C.

Si les polyesters biodégradables présentent un point de fusion supérieur ou égal à 100°C, il est proposé d'augmenter la pression de fonctionnement de l'extrudeuse ou d'ajouter des plastifiants pour abaisser ledit point de fusion. Il n'est cependant précisé ni le type, ni la nature (en termes de valeurs des paramètres de solubilité et de capacité à former des liaisons hydrogènes) ni la quantité d'agents plastifiants à utiliser. Aucune proposition pour lesdits agents plastifiants n'est ainsi donnée.

Ce procédé présente en outre deux inconvénients majeurs :
- le premier inconvénient réside dans le fait que le procédé ne vise qu'à obtenir des dispersions aqueuses très visqueuses, seule manière, d'après l'enseignement de cette demande de brevet EP 1.302.502, d'obtenir une émulsion stable dans le temps.

Il s'agit en effet d'éviter que les plus grosses particules ne sédimentent et ne conduisent par voie de conséquence à un abaissement de la MS de l'émulsion par séparation de phase.

Cette solution n'est pas satisfaisante car elle conduit à des émulsions visqueuses difficiles à manipuler et rend difficile l'obtention de films minces. En effet, des solutions trop visqueuses conduisent à des films épais, hétérogènes en épaisseur, qui se fissurent et consomment beaucoup de matières.

Une dispersion aqueuse visqueuse ne favorise pas non plus la coalescence des particules de polymères en suspension lors de la préparation des films (problème d'encombrement stérique) et en diminue la résistance mécanique.
- le deuxième inconvénient est lié à la nature du procédé de fonte / malaxage du polyester biodégradable proprement dit dans une extrudeuse.

En effet, l'opération d'extrusion conduit à un cisaillement intense de la masse fondue malaxée, ce qui altère la structure et les propriétés intrinsèques du polymère. Les films fabriqués à partir de cette dispersion aqueuse sont moins résistants mécaniquement et moins rigides. Ce cisaillement conduit également à l'augmentation des terminaisons hydrophiles et à l'augmentation de la mobilité des chaînes du polymère. Cette augmentation d'hydrophilie se traduit alors par une augmentation de la diffusion de l'eau dans le polymère, ce qui en augmente les vitesses d'hydrolyse et de dégradation.

Un procédé assez voisin de préparation de dispersions aqueuses par extrusion, présentant ces mêmes inconvénients, est décrit dans le brevet US 4.502.888.

Le procédé décrit dans ce brevet ne s'applique qu'aux polymères biodégradables de type cellulosique associés à des acides gras à longues chaînes, et ne permet d'obtenir que des dispersions aqueuses de faible matière sèche (de l'ordre de 30 %).

La demande de brevet WO 97/49762 décrit quant à elle une dispersion aqueuse de polymères biodégradables qui contient des amidons modifiés par estérification, dispersés dans une phase aqueuse, et un procédé sans solvant de fabrication desdites dispersions aqueuses.

Le procédé consiste à préparer un mélange en phase fondue, à une température de 100 à 180°C de polymères et de plastifiants, puis à garder ce mélange sous agitation à haute température, avant d'ajouter graduellement de l'eau et des agents dispersants.

On note cependant que si l'on obtient des dispersions aqueuses de polymères biodégradables à haute matière sèche sans solvants organiques volatils, cette demande de brevet enseigne que cela ne peut se faire :
- que par l'ajout de plastifiant en quantité très importante, voire excessive par rapport aux polymères biodégradables (il faut en effet introduire entre 75 parts à 175 parts de plastifiant pour 100 parts de polymères biodégradables), ce qui conduit obligatoirement à une altération des propriétés conférées par lesdits polymères,
- que par le maintien, tout comme dans la demande de brevet EP 1.302.502, d'une viscosité élevée desdites dispersions aqueuses (supérieure à 1200 mPa.s),
- ce qui conduit à l'obtention de dispersions aqueuses renfermant de très faibles quantités de polymères, étant donné la nécessité d'introduire le plastifiant en excès.

Par ailleurs, il est dit que la phase fondue peut être préparée dans une extrudeuse, ce qui conduit aux mêmes problèmes d'altération des polymères mis en oeuvre que ceux évoqués plus haut pour la discussion de l'enseignement de l'EP 1.302.502.

De tout ce qui précède, il résulte qu'il existe un besoin non satisfait de disposer d'une dispersion aqueuse d'un polymère biodégradable, stable dans le temps, exempte de composés organiques volatils, de haute matière sèche, de faible viscosité, comprenant au moins un polymère biodégradable aux propriétés intrinsèques conservées, et pouvant ne comprendre que des ingrédients biodégradables.

La Société Demanderesse a eu le mérite de concilier tous ces objectifs réputés jusqu'alors difficilement conciliables en imaginant et élaborant, au prix de nombreuses recherches, de nouvelles dispersions de polymères biodégradables.

Les dispersions aqueuses d'au moins un polymère biodégradable comprenant une phase organique dispersée dans une phase aqueuse dispersante et dépourvues de composés organiques volatils, conformes à l'invention, sont caractérisées par le fait que ladite phase organique comprend :
- au moins un agent réducteur de viscosité présentant un paramètre de solubilité compris entre 15 et 28 (J.cm⁻³)^{0,5}, de préférence compris entre 16 et 23 (J.cm⁻³)^{0,5}, plus préférentiellement encore compris entre 18 et 21 (J. cm-³)^{0,5}, et un paramètre de liaison hydrogène δH compris entre 3,5 et 15 (J.cm⁻³)^{0,5}, et de préférence entre 4 et 13 (J. cm⁻³)^{0,5}, et plus préférentiellement encore compris entre 5 et 10 (J.cm-³)^{0,5},
- au moins un polymère biodégradable dans un rapport pondéral polymère / agent réducteur de viscosité de 99,8/0,2 à 60/40, de préférence compris entre 97/3 à 70/30, plus préférentiellement compris entre 92/8 et 70/30.

Les dispersions aqueuses d'au moins un polymère biodégradable conformes à l'invention présentent une teneur en composés organiques volatils qui ne dépasse pas celle des ingrédients desdites dispersions aqueuses, i.e. au plus égale à 5.000 ppm, de préférence d'au plus 1.000 ppm, et plus préférentiellement encore d'au plus 500 ppm.

Ces dispersions aqueuses ne présentent donc aucun des inconvénients des préparations de l'art antérieur préparées avec des composés organiques volatils.

Les dispersions aqueuses d'au moins un polymère biodégradable conformes à l'invention présentent ensuite dans leur phase organique dispersée un agent réducteur de viscosité ayant un paramètre de viscosité et un paramètre de liaison hydrogène particuliers.

La société Demanderesse a trouvé après de multiples essais qu'il est judicieux de choisir, pour les agents réducteurs de viscosité, cette gamme particulière de paramètres de solubilité et de liaison hydrogène afin de les rendre hautement compatibles avec la très haute majorité des polymères biodégradables avec lesquels ils seront associés, ce qui permet d'obtenir :
- un meilleur effet de réduction de viscosité des polymères biodégradables,
- une très grande homogénéité de la phase organique même à très haute température (absence de démixtion),
- une amélioration de la coalescence des particules de la dispersion aqueuse, facilitant l'emploi de celles-ci à des températures relativement basses,
- une amélioration des propriétés filmogènes des polymères biodégradables, et
- une amélioration ou un ajustement après coalescence de l'allongement à la rupture des films, de leur souplesse et de leur élasticité.

Ces paramètres permettent aussi de choisir des agents réducteurs de viscosité capables de contrôler l'aptitude de certains polymères biodégradables à cristalliser.

Les paramètres de HILDEBRAND (solubilité) et de HANSEN (capacité de liaison hydrogène) des agents réducteurs de viscosité sont classiquement donnés dans des tables accessibles à l'homme du métier.

On pourra notamment se référer à l'article de H. BURRELL intitulé Solubility parameters for film formers in Official DIGEST d'Octobre 1955 pp 726-758 et à celui A. BARTON intitulé Solubility parameters in Chemical Reviews, 1975, vol 75 n°6, pp 731-753. Des tables plus complètes peuvent être trouvées dans l'ouvrage intitulé CRC Handbook of Solubility parameters and other cohesion parameters de Allan BARTON, CRC Press, Inc. Boca Raton, Florida, 2nd edition, 1991, pp 94-110.

Pour le paramètre de solubilité, il est également connu de pouvoir le déterminer par simple calcul à partir des mesures directes notamment de la chaleur latente de vaporisation du composé d'intérêt, de sa température d'ébullition ou encore à partir d'équations empiriques telle celle de HILDEBRAND.

Les agents réducteurs de viscosité des dispersions aqueuses conformes à l'invention doivent alors présenter un paramètre de solubilité compris entre 15 et 28 (J.cm⁻³)^{0,5}, de préférence compris entre 16 et 23 (J.cm⁻³)^{0,5}, plus préférentiellement encore compris entre 18 et 21 (J.cm⁻³)^{0,5}, et un paramètre de liaison hydrogène δH compris entre 3,5 et 15 J.cm⁻³)^{0,5}, et de préférence entre 4 et 13 (J.cm⁻³)^{0,5}, et plus préférentiellement encore compris entre 5 et 10 (J.cm⁻³)^{0,5}.

Les agents réducteurs de viscosité conformes à l'invention sont donc choisis dans la gamme des solvants organiques lourds présentant une capacité dite « moyenne » à former des liaisons hydrogènes avec le polymère biodégradable.

Il a été montré par la société Demanderesse que des agents réducteurs de viscosité présentant des paramètres de solubilité et/ou de liaison hydrogène se situant en dehors de ces valeurs, comme le glycérol par exemple, qui présente un paramètre de solubilité de 33,8 (J.cm⁻³)^{0,5} et un paramètre de liaison hydrogène de 29,3 (J.cm⁻³)^{0,5} (capacité forte à former des liaisons hydrogènes), recommandé pourtant pour plastifier les polymères biodégradables, ne permettent pas de diminuer significativement la viscosité à chaud des polymères, tendent même parfois à l'augmenter, ou bien se séparent lors du refroidissement de ces polymères après mélange à haute température.

Il en est de même pour des produits trop apolaires tels que les acides gras libres à longues chaînes qui ne présentent pas de paramètres de solubilités se situant dans les gammes conformes à ceux requis pour l'invention.

Il a été ainsi démontré par la société Demanderesse que les acides gras libres à chaînes longues (présentant au moins 14 atomes de carbone) tels que les acides oléique, linoléique, palmitique, stéarique... ne sont généralement pas miscibles aux polymères biodégradables, même à chaud, et ne constituent pas des agents réducteurs de viscosité suffisamment efficaces dans le cadre de l'invention.

Les dispersions aqueuses d'au moins un polymère biodégradable conformes à l'invention présentent ensuite dans leur phase organique au moins un polymère biodégradable dans un rapport pondéral polymère / agent réducteur de viscosité de 99,8/0,2 à 60/40, de préférence compris entre 97/3 à 70/30, plus préférentiellement compris entre 92/8 et 70/30.

Il a été trouvé par la société Demanderesse que ces rapports pondéraux polymère / agent réducteur de viscosité sont avantageusement choisis de manière à permettre :
- un meilleur assouplissement des films,
- une meilleure résistance aux chocs mécaniques,
- une meilleure conservation des propriétés cohésives du film obtenu, et
- une augmentation de la résistance à l'eau.

La société Demanderesse a ainsi montré que l'utilisation des agents réducteurs de viscosité dans ces proportions permet un effet plastifiant plus efficace.

La société demanderesse a par ailleurs trouvé que l'absence d'agents réducteurs de viscosité rend difficile la préparation de dispersions aqueuses ou l'obtention de dispersions aqueuses stables dans le temps. En revanche, la présence excessive des agents réducteurs de viscosité, i.e. au delà de 40 %, altère grandement les propriétés filmogènes des polymères biodégradables.

Les dispersions aqueuses selon l'invention présentent avantageusement une viscosité à 20°C comprise entre 50 et 5000 mPa.s, de préférence comprise entre 50 et 2.000 mPa.s., plus préférentiellement encore supérieure ou égale à 100 mPa.s et strictement inférieure à 1.000 mPa.s.

La mesure de viscosité des dispersions aqueuses conformes à l'invention est effectuée par viscosimétrie BROOKFIELD ou équivalent, selon les conditions spécifiées par le constructeur.

Il est du mérite de la société Demanderesse de proposer des dispersions aqueuses d'au moins un polymère biodégradable présentant une haute stabilité tout en ayant une faible viscosité.

Ceci résulte, comme il sera établi ci-après, du choix de la nature particulière et de la quantité adéquate de l'agent réducteur de viscosité contenu dans leur phase organique.

Par exemple, dans la demande de brevet WO 97/49762, lorsque les polymères biodégradables sont des esters d'amidon, il est fait usage d'un rapport pondéral polymère biodégradable/plastifiant de 57/43, et dans la majorité des cas de 36/64.

De manière surprenante et inattendue, les dispersions aqueuses d'au moins un polymère biodégradable selon l'invention ne renferment au contraire pas plus de 40 % d'agent réducteur de viscosité dans leur phase organique, et présentent pourtant une viscosité basse qui ne dépasse généralement pas les 5.000 mPa.s.

Par ailleurs, à la connaissance de la société Demanderesse, il n'existe pas dans l'état de la technique de dispersions aqueuses stables de polymères biodégradables dépourvues de composé organique volatil et d'une viscosité strictement inférieure à 1.000 mPa.s.

Les dispersions aqueuses conformes à l'invention présentent une teneur en matière sèche comprise entre 25 et 70 % en poids, de préférence comprise entre 35 et 65 % en poids, plus préférentiellement encore comprise entre 40 et 60 % en poids.

Contrairement à ce qui est déploré dans l'état de la technique, il est donc possible de proposer, grâce à la présente invention, des dispersions aqueuses de polymères biodégradables fluides (de viscosité généralement inférieure à 5.000 mPa.s et encore mieux strictement inférieure à 1.000 mPa.s) présentant par ailleurs une matière sèche élevée.

Les dispersions aqueuses conformes à l'invention présentent avantageusement une teneur totale en polymères biodégradables et en agent réducteur de viscosité d'au moins 80 % en poids de la matière sèche desdites dispersions aqueuses, préférentiellement d'au moins 90 % en poids, plus préférentiellement encore d'au moins 95 % en poids.

La teneur totale en polymères biodégradables de ces dispersions aqueuses est avantageusement d'au moins 50 % en poids de la MS desdites dispersions aqueuses, de préférence d'au moins 65 % en poids, plus préférentiellement encore d'au moins 70 % en poids, et mieux encore d'au moins 75 % en poids.

Les polymères biodégradables sont des composés quasiment insolubles dans l'eau mais souvent aussi relativement peu solubles dans des solvants organiques volatils. C'est la raison pour laquelle les technologies classiques de préparation d'émulsions de polymères biodégradables à l'aide de solvants organiques volatils ne peuvent renfermer plus de 20 % de polymères biodégradables, dès lors que le solvant n'est pas chassé.

Les dispersions aqueuses d'au moins un polymère biodégradable conformes à l'invention sont également caractérisées par la répartition granulométrique de leurs particules.

La détermination de la taille de ces particules est effectuée sur granulomètre laser BECKMAN COULTER type LS 13320 avec le module liquide.

Les dispersions aqueuses conformes à l'invention présentent avantageusement une granulométrie moyenne des particules desdites dispersions comprise entre 0,05 et 10 µm, de préférence comprise entre 0,5 et 5 µm.

La taille des particules est tout à fait avantageuse à la fois pour obtenir des dispersions aqueuses stables, et pour que les films préparés à partir desdites dispersions aqueuses présentent une imprimabilité et une résistance mécanique tout à fait satisfaisantes.

Les dispersions aqueuses selon l'invention renferment également avantageusement 90 % de leurs particules de taille inférieure à 15 µm, de préférence inférieure à 10 µm et plus préférentiellement encore inférieure à 8 µm.

La société Demanderesse a trouvé par ailleurs que des compositions multimodales de répartition des tailles de particules fines permettent d'assurer un meilleur remplissage des vides entre particules. Les émulsions résultantes sont alors de plus faible viscosité encore (strictement inférieure à 1.000 mPa.s) ou peuvent présenter une plus haute matière sèche.

La société Demanderesse a trouvé que le choix du polymère biodégradable n'est pas un facteur limitant, ce qui en soi est remarquable. En effet, le respect du profil de l'agent réducteur de viscosité dans ses valeurs de paramètres de solubilité, sa capacité de liaison hydrogène et dans son rapport pondéral avec le polymère en question permet d'incorporer tout type de polymère biodégradable.

Cependant, la société Demanderesse recommande de le choisir dans le groupe constitué par les polymères biodégradables de type polylactates (ou PLA), polymalates (ou PMA), polyhydroxyalcanoates (ou PHA), polycaprolactones (ou PCL), polyesteramides (PEA), les copolyesters aliphatiques (PBSA) et les copolyesters aliphatiques-co-téréphatalates (PBAT), les amidons hautement acétylés ou rendus hydrophobes par introduction de chaînes grasses fixées, pris seuls ou en combinaison, sous forme d'homopolymères, d'hétéropolymères, qu'ils soient linéaires, ramifiés, réticulés, dendritiques ou greffés.

De façon avantageuse, les polymères biodégradables sont des hétéropolymères, de préférence des di-, tri- ou tétra-polymères dont les monomères sont des diols, des caprolactones ou des acides et hydroxyacides choisis dans le groupe constitué par les acides D lactique, L lactique, glycolique, tétraméthylglycolique, malique, β propiolactique, butyrique, valérique, phtalique, téréphtalique, succinique, adipique, sébacique, hexanoïque, octanoïque, décanoïque, dodécanoïque, tétradécanoïque, hexadécanoïque et octadécanoïque.

Pour les hétéropolymères, la société Demanderesse recommande de sélectionner au moins deux monomères à polymériser de manière à ce le premier soit solide à température ambiante, et le second plus fluide à cette température. On obtient en ce cas des dispersions aqueuses bien adaptées à la formation de films.

Les polymères biodégradables peuvent être des hétéropolymères statistiques, alternés, séquencés ou à blocs.

La société Demanderesse a trouvé que l'aptitude des polymères à cristalliser fortement n'était pas recommandée pour les dispersions aqueuses conformes à l'invention.

On préfère retenir un polymère biodégradable se présentant dans lesdites dispersions sous forme amorphe ou semi-cristalline, préférentiellement sous forme amorphe.

Au sens de l'invention, la forme « amorphe » du polymère biodégradable contient au plus 25 % de polymères sous forme cristallisée. La forme « semi-cristalline » contient au plus 60 % de polymères sous forme cristallisée.

A ce titre, on peut choisir un polymère biodégradable de type PLA, présentant une teneur en D lactique après hydrolyse (ou en copolymères) supérieure à 10 %, de préférence comprise entre 12 et 88 % ; de type PHA, présentant une teneur en co-monomères par exemple de type hydroxyvalerate, hydroxyhexanoate, hydroxyoctanoate supérieure à 5 %, de préférence supérieure à 10 %.

De manière facultative, on choisit un polymère biodégradable fonctionnalisé, de préférence par un groupement de type aldéhyde, fluoré, acide carboxylique, amine et alcool.

La société Demanderesse a enfin trouvé que les polymères biodégradables de type PHA proposés par la société PROCTER & GAMBLE sous le nom de marque NODAX® , et les polymères biodégradables de type PLA proposés par la société GALACTIC sous le nom de marque GALASTIC® L68 convenaient particulièrement bien.

Les caractéristiques analytiques des polymères biodégradables constitutifs de la phase organique des dispersions aqueuses conformes à l'invention sont préférentiellement les suivantes :
- un PM compris entre 10.000 et 1.000.000 d, et préférentiellement compris entre 15.000 et 500.000 d, préférentiellement encore compris entre 15.000 et 200.000 d,
- une température de transition vitreuse (Tg) comprise entre -70 à +70°C, préférentiellement comprise entre -45 et +60°C et plus préférentiellement encore comprise entre -30 et +20°C,
- une viscosité « complexe » à 160°C comprise entre 5 et 20.000 Pa.s., de préférence comprise entre 10 et 5.000 Pa.s., plus préférentiellement encore comprise entre 20 et 500 Pa.s.

La température de transition vitreuse est classiquement déterminée par analyse thermique différentielle sur DSC METTLER type DSC 821.

La viscosité « complexe » est une viscosité mesurée en mode dynamique (sous contrainte sinusoïdale) sur rhéomètre TA Instruments type AR 2000 en suivant les spécifications du constructeur.

Quant à la nature de l'agent réducteur de viscosité, la société Demanderesse recommande de le choisir dans le groupe des esters d'acides et d'alcools, éventuellement éthoxylés, de préférence des mono-, di- ou tri-esters d'acides organiques, de l'acide carbonique et de l'acide phosphorique, de sucres ou de polyols.

Il peut être également choisi dans le groupe des éthers éventuellement éthoxylés de sucres, de polyols (notamment d'isosorbide), de glycol ou de phénol, des éther-esters de glycols ou des huiles triglycéridiques époxydées.

Il est souhaitable de le choisir biodégradable et de qualité alimentaire.

L'agent réducteur de viscosité présente également avantageusement un point d'ébullition supérieur à 130°C, de préférence supérieur à 150°C et plus préférentiellement encore supérieur à 200°C, ce qui le range dans la catégorie des solvants lourds particulièrement bien adaptés à leur fonction.

La société Demanderesse recommande de choisir l'agent réducteur de viscosité dans le groupe constitué par le triacétate de glycérol, le diméthyl isosorbide, les diacétates, dibutyrates, diisobutyrates, les dihexylates, diéthylhexylates, dioctanoates, les didécanoates, didodécanoates d'isosorbide, d'isoidide ou d'isomannide, le lactate d'éthyle, le lactate de butyle, le laurate de méthyle, le maléate de dibutyle, le tributyl citrate, le triéthyl citrate, le bis(2 éthyl-hexyl) adipate, le diisobutyladipate, le dibutyl phtalate, l'acide propionique, le tributyrate de glycérol, le triisobutyrate de glycérol, l'éthylène glycol dibenzoate, le diéthylène glycol dibenzoate, propylène glycol dibenzoate, dipropylène glycol dibenzoate, tri éthylène glycol benzoate, dibutyl sébaçate, diisobutyl sébaçate, carbonate de propylène, poly éthylène glycol 400, poly éthylène glycol 600, caprolactone diols de poids moléculaire voisin de 500, les esters gras des acides adipiques, succiniques et glucariques tels que les produits commercialisés par la société DUPONT sous le nom de marque DBE® et DBE® -IB, et les esters méthyliques, éthyliques, butyliques, hexyliques et éthylhexyliques d'huile végétale.

Tous ces agents réducteurs de viscosité présentent un paramètre de HILDEBRAND compris entre 15 et 28 (J.cm⁻³)^{0,5}, de préférence compris entre 16 et 23 (J.cm⁻³)^{0,5}, plus préférentiellement encore compris entre 18 et 21 (J.cm⁻³)^{0,5}, et un paramètre de liaison hydrogène δH compris entre 3,5 et 15 (J.cm⁻³)^{0,5}, et de préférence entre 4 et 13 (J.cm⁻³)^{0,5}, et plus préférentiellement encore compris entre 5 et 10 (J.cm⁻³)^{0,5}.

Les dispersions aqueuses conformes à l'invention sont alors caractérisées par le fait que le mélange de polymère biodégradable avec l'agent réducteur de viscosité de la phase organique présente une viscosité complexe à 160°C comprise entre 0,05 et 30 Pa.s., de préférence compris entre 0,5 et 15 Pa.s., préférentiellement encore compris entre 1 et 10 Pa.s.

Les dispersions aqueuses conformes à l'invention comprennent également dans leur phase aqueuse dispersive un stabilisant choisi dans le groupe des polyols, des oligosaccharides et des polysaccharides issus de celluloses, d'amidons et de gommes naturelles et fermentaires natifs ou modifiés, préférentiellement par hydroxy-propylation, hydroxy-éthylation, alkylation ou alkyl succinylation, les peptides et polypeptides, les alcools polyvinyliques éventuellement modifiés.

Le choix d'un polyol comme agent stabilisant permet par exemple d'améliorer l'émulsification du polymère biodégradable, d'augmenter la température d'ébullition de la phase aqueuse au-delà de 100°C, d'améliorer la stabilité de l'émulsion, de contrôler la vitesse de coalescence des particules et d'ajuster l'hydrophilie du film.

La société Demanderesse recommande d'introduire le stabilisant présent dans la phase aqueuse dispersive dans une proportion d'au plus 20 % en poids du poids total desdites dispersions aqueuses, préférentiellement d'au plus 10 % en poids, plus préférentiellement encore d'au plus 5 % en poids.

Le procédé de préparation des dispersions aqueuses d'au moins un polymère biodégradable conformes à l'invention, comprend les étapes suivantes :
1) préparer la phase organique à disperser par la mise à l'état fondu du mélange de polymère biodégradable et d'agent réducteur de viscosité, à une température supérieure à la température de transition vitreuse du polymère biodégradable de manière à obtenir un mélange fondu homogène, le rapport entre polymère biodégradable et agent réducteur de viscosité étant compris entre 99,8/0,2 à 60/40, de préférence compris entre 97/3 à 70/30, plus préférentiellement compris entre 92/8 et 70/30,
2) solubiliser totalement au moins un agent stabilisant dans la phase aqueuse dispersante,
3) introduire simultanément et continuellement la phase aqueuse dispersante et la phase organique à disperser ainsi obtenues dans le malaxeur d'un groupe émulsifieur, en ayant réglé préalablement les débits d'introduction des deux phases de manière à ce que la phase organique dispersée représente au moins 80 % en poids de la matière sèche desdites dispersions aqueuses, préférentiellement d'au moins 90 % en poids, plus préférentiellement encore d'au moins 95 % en poids, et
4) récupérer les dispersions aqueuses ainsi obtenues.

Pour la préparation des dispersions aqueuses selon l'invention, on utilise un groupe émulsionneur, par exemple un groupe émulsionneur tel un de ceux commercialisés par la société EMULBITUME (Trégueux - France) comprenant :
- un turbomalaxeur,
- deux ensembles pour préparer la phase organique à disperser et la phase aqueuse dispersante comprenant chacun un bac calorifugé, une pompe volumétrique et un ensemble de conduites calorifugées.

Ce type d'appareil permet la préparation des dispersions aqueuses à pression atmosphérique et à un débit d'au moins 100 l/h, par mise en contact simultanée dans le malaxeur de la phase organique à disperser à l'état fondu, comprenant le ou les polymère(s) biodégradable(s) avec l'agent réducteur de viscosité, et de la phase aqueuse dispersante comprenant les agents stabilisants.

La première étape du procédé conforme à l'invention comprend donc la préparation de la phase organique à disperser par la mise à l'état fondu du mélange de polymère biodégradable et d'agent réducteur de viscosité, à une température supérieure à la température de transition vitreuse du polymère biodégradable de manière à obtenir un mélange fondu homogène, le rapport entre polymère biodégradable et agent réducteur de viscosité étant compris entre 99,8/0,2 à 60/40, de préférence compris entre 97/3 à 70/30, plus préférentiellement compris entre 92/8 et 70/30.

Pour cette première étape, aucun composé organique volatil n'est donc nécessaire pour solubiliser le polymère biodégradable.

De manière avantageuse, on choisit un polymère biodégradable stabilisé par des agents antioxydants, des agents stabilisants thermiques et des agents stabilisants vis à vis de la lumière ou d'une hydrolyse aqueuse.

A ce titre, on peut notamment utiliser des agents aptes à bloquer les fonctions carboxyliques libres éventuelles du polymère biodégradable comme par exemple les polycarbodiimides.

Il s'agit de placer le ou les polymère(s) biodégradable(s) et l'agent réducteur de viscosité dans lesdites proportions à une température suffisante de manière à obtenir un mélange fondu homogène.

Cette température est généralement de 100°C supérieure à la température de transition vitreuse du ou des polymère(s) biodégradable(s) lorsqu'ils sont sous forme amorphe, et généralement de 10°C supérieure à la température de transition vitreuse du ou des polymère(s) biodégradable(s) lorsqu'ils sont sous forme semi-cristalline.

Le mélange fondu homogène est alors placé dans le bac calorifugé prévu à cet effet dans l'émulsionneur, à une température constante et suffisante pour permettre le pompage de ce mélange fondu par l'appareil, comme il sera exemplifié ci-après.

La deuxième étape du procédé conforme à l'invention comprend la solubilisation totale d'au moins un agent stabilisant dans la phase aqueuse dispersante.

La solubilisation de l'agent stabilisant s'effectue dans de l'eau de préférence désionisée. Le mélange est ensuite agité jusqu'à obtenir une solution homogène qui est alors introduite dans le bac calorifugé prévu à cet effet sur l'émulsionneur où il est maintenu à cette température.

La troisième étape du procédé conforme à l'invention est d'introduire simultanément et continuellement la phase aqueuse dispersante et la phase organique à disperser ainsi obtenues dans le malaxeur d'un groupe émulsifieur, en ayant réglé préalablement les débits d'introduction des deux phases de manière à ce que la phase organique dispersée représente au moins 80 % en poids de la matière sèche desdites dispersions aqueuses, préférentiellement d'au moins 90 % en poids, plus préférentiellement encore d'au moins 95 % en poids.

Le réglage des débits des phases organiques et aqueuses s'effectue en fonction de leur viscosité respective, de façon à obtenir le rapport phase organique / phase aqueuse souhaité.

De manière avantageuse, on peut effectuer lors de cette étape du procédé conforme à l'invention, un refroidissement en ligne à température ambiante du mélange émulsifié ainsi obtenu.

La quatrième étape comprend la récupération des dispersions aqueuses ainsi obtenues.

Les dispersions aqueuses d'au moins un polymère biodégradable conformes à l'invention peuvent être utilisées pour leurs propriétés liantes/collantes, d'imprimabilité, de dégradabilité, de résistance/tenue à l'eau, de brillance, de résistance aux huiles, de résistance aux taches et de résistance mécanique, ce qui les destine notamment aux domaines des textiles, des sauces de couchage, des peintures, des colles, des enduits et ciment-colles et des enrobages/encapsulation.

D'autres caractéristiques et avantages de l'invention apparaîtront à la lecture des exemples non limitatifs décrits ci-dessous.

### Exemple 1

Pour la phase organique, on choisit un polymère biodégradable sous la forme de « pellets » de polylactate GALASTIC® L68, fabriqués et commercialisés par la société GALACTIC, présentant un poids moléculaire en nombre de 68.000 d environ, un indice de polydispersité de 2,78, une température de transition vitreuse de 54,9°C, une viscosité complexe de 220 Pa.s à 130°C et de 30 Pa.s à 160°C, un taux de cristallinité proche de 0 % et une teneur en acide D lactique après hydrolyse de 12,4 %.

L'agent réducteur de viscosité retenu est le triacétate de glycérol (triacétine) tel que commercialisé par la société SIGMA ALDRICH.

Le paramètre de HILDEBRAND, calculé à partir de la chaleur latente de vaporisation de la triacétine (85,74 kJ/mol, ou de sa température d'ébullition (259°C) est de 21 (J.cm⁻³)^{0,5}.

Le paramètre de HANSEN, donné par les tables du CRC HANDBOOK, est de 11,2 (J.cm⁻³)^{0,5}.

Pour la phase aqueuse, l'agent stabilisant est le Polyvinyl alcool POVAL JP 18Y, présentant un degré d'hydrolyse de 88 ± 1 %, une viscosité de 25 ± 2 mPa.s, d'une pureté supérieure à 94 % commercialisé par la société TVP JAPAN VAM & POVAL Co. Ltd.

Le procédé de fabrication de la dispersion aqueuse correspondante est effectué comme suit :
1) Préparation de la phase organique à disperser :
   Dans une cuve chauffée électriquement et maintenue à 160°C, on introduit 2.400 g de pellets de PLA type GALASTIC L68 et 600 g de triacétine (soit un rapport entre polymère biodégradable et agent réducteur de viscosité de 80/20).
   Lorsque ces produits sont totalement fondus, le mélange est rendu homogène par agitation.
2) Préparation de la phase aqueuse dispersante :
   Sous agitation mécanique, on disperse dans 4.500 g d'eau désionisée et à 80 °C, 240 g de polyvinyl alcool POVAL JP 18Y et 0,5 g d'antimousse FOAMASTER PD1 commercialisé par la société COGNIS.
3) réalisation de la dispersion aqueuse conforme à l'invention :
   Le mélange simultané de la phase organique à disperser et la phase aqueuse dispersante est réalisé dans un groupe émulsionneur de laboratoire commercialisé par la société EMULBITUME.
   Les phases organique et aqueuse sont transvasées dans leurs bacs calorifugés respectifs thermostatés à 160°C et à 80 °C.
   Les pompes volumétriques sont mises en fonctionnement en circuit fermé pour ajuster les températures respectives et régler les débits de manière à obtenir une teneur en phase organique dispersée de 95,4 % sur sec.
   Après ouverture des vannes, les phases organique et aqueuse sont envoyées simultanément et continuellement dans le turbomalaxeur ATOMIX C à 8.900 t/min.
   On obtient en sortie de l'ATOMIX C une dispersion aqueuse présentant les caractéristiques données dans le tableau I suivant.

**TABLEAU I**

| Caractéristiques initiales | |
|---|---|
| Matières sèches (%) | 53,7 |
| Valeur du pH | 2,2 |
| Diamètre moyen (µm) | 3,7 |
| d90 (µm) | 9,3 |
| Viscosité Brookfield (mPa.s) | 250 |
| Aspect | Emulsion laiteuse |

| Caractéristiques après 2 mois de stockage à température ambiante | |
|---|---|
| Valeur du pH | 2,2 |
| Viscosité Brookfield | 190 |
| Aspect | Emulsion laiteuse |

La dispersion aqueuse ainsi obtenue selon l'invention présente une très faible viscosité pour une haute matière sèche, tout en étant par ailleurs très stable dans le temps.

### Exemple 2

Trois dispersions aqueuses sont préparées en suivant le même protocole que celui décrit dans l'exemple 1, à partir :
- du polymère biodégradable GALASTIC® L68,
- d'agents réducteurs de viscosité telle la triacétine mais aussi le diisobutyl adipate, commercialisé par la société SIGMA ALDRICH (ses paramètres de HILDEBRAND et de HANSEN sont respectivement de 18,5 (J. cm⁻³)^{0,5} et de 7,3 (J.cm⁻³)^{0,5}) et le mélange de glycols benzoate commercialisé par la société VELSICOL CHEMICAL Limited sous le nom de marque BENZOFLEX® 2088 (ses paramètres de HILDEBRAND et de HANSEN sont respectivement de 19,8 (J.cm⁻³)^{0,5} et de 9,6 (J.cm⁻³)^{0,5}),
- d'agents stabilisants tel le polyvinyl alcool POVAL JP 18Y, le tensioactif PLURONIC® F18 de SIGMA ALDRICH, la fécule acétylée (I.A. = 1,8) et extrudée, fabriquée et commercialisée également par la société Demanderesse ou la gomme de xanthane, commercialisée par la société SIGMA ALDRICH.

Le tableau II suivant présente les compositions et les caractéristiques analytiques et fonctionnelles des dispersions aqueuses ainsi obtenues.

**TABLEAU II**

| Compositions (%) | | | |
|---|---|---|---|
| GALASTIC L® 68 | 35,5 | 35,4 | 35,0 |
| Triacétine | 8,8 | | |
| Diisobutyl adipate | | 8,8 | |
| BENZOFLEX 20888,5 | | | |
| PLURONIC® F18 | 0,2 | | |
| Polyvinyl alcool POVAL JP 18 X | 1,4 | 1,4 | 1,4 |
| Fécule acétylée extrudée | 1,4 | 1,0 | 1,0 |
| Gomme de xanthane | 0,1 | 0,1 | 0,1 |
| Eau | 52,6 | 51,3 | 52,0 |
| Solution alcaline de soude 10 N | | 2,0 | 2,0 |

| Caractéristiques initiales | | | |
|---|---|---|---|
| Matières sèches (%) | 47,2 | 45,0 | 43,0 |
| Valeur du pH | 2,2 | 5,0 | 5,0 |
| Diamètre moyen (µm) | 6,9 | 3,8 | 3,6 |
| d90 (µm) | 19,3 | 9,0 | 8,1 |
| Viscosité Brookfield (mPa.s) | 940 | 390 | 950 |
| Aspect | Emulsion laiteuse | Emulsion laiteuse | Emulsion laiteuse |

| Caractéristiques après 2 mois de stockage à température ambiante | | | |
|---|---|---|---|
| Valeur du pH | 2,1 | 3,6 | 4,2 |
| Viscosité Brookfield | 2100 | 760 | 4900 |
| Aspect | Emulsion laiteuse | Emulsion laiteuse | Emulsion crémeuse |

Les dispersions aqueuses conformes à l'invention présentent une faible viscosité (strictement inférieure à 1.000 mPa.s. à 20°C), une haute matière sèche (bien supérieure à 40 %) et une excellente stabilité dans le temps. A noter que la dispersion aqueuse de PLA préparée avec du diisobutyladipate présente une remarquable tenue dans le temps.

### Exemple 3

On prépare une dispersion aqueuse conformément à l'invention selon le procédé de l'exemple 1, présentant une composition figurée dans le tableau III suivant.

**TABLEAU III**

| Composition (%) | |
|---|---|
| GALASTIC L® 68 | 46,40 |
| Polyvinyl alcool POVAL JP 18 Y | 1,07 |
| Gomme xanthane | 0,07 |
| Mélange 50/50 d'ester méthylique de colza (NOVAOL) et de dipropylène glycol dibenzoate (BENZOFLEX® 9-88) | 11,60 |
| Eau | 40,86 |

Le tableau IV suivant présente les caractéristiques analytiques et fonctionnelles de la dispersion aqueuse ainsi obtenue, présentant une matière sèche de 59,14 % en poids.

**TABLEAU IV**

| | |
|---|---|
| pH | 2 |
| Viscosité BROOKFIELD (20 rpm, 20°C) (mPa.s) | |
| initiale : | 612 |
| après 1 mois de stockage : | 1020 |
| Aspect | Emulsion homogène |
| Coloration | Blanc-crème |
| Granulométrie laser (µm) | |
| Diamètre moyen : | 3,5 |
| d 90 (en volume): | 7,6 |

Il a été constaté que cette dispersion aqueuse dépourvue de composé organique volatil conforme à l'invention, appliquée en couche mince sur un support, permet d'obtenir un film cohésif présentant une excellente tenue à l'eau, une excellente transparence et une brillance élevée.

## Revendications

1. Dispersions aqueuses d'au moins un polymère biodégradable comprenant une phase organique dispersée dans une phase aqueuse dispersante et dépourvues de composés organiques volatils, **caractérisées par le fait que** ladite phase organique comprend :
- au moins un agent réducteur de viscosité présentant un paramètre de solubilité compris entre 15 et 28 (J.cm⁻³)^{0,5}, de préférence compris entre 16 et 23 (J.cm⁻³)^{0,5}, plus préférentiellement encore compris entre 18 et 21 (J.cm⁻³)^{0,5}, et un paramètre de liaison hydrogène dH compris entre 3,5 et 15 (J.cm⁻³)^{0,5}, et de préférence entre 4 et 13 (J.cm⁻³)^{0,5}, et plus préférentiellement encore compris entre 5 et 10 (J.cm⁻³)^{0,5},
- au moins un polymère biodégradable dans un rapport pondéral polymère/agent réducteur de viscosité de 99,8/0,2 à 60/40, de préférence compris entre 97/3 à 70/30, plus préférentiellement compris entre 92/8 et 70/30.

2. Dispersions selon la revendication 1, **caractérisées par le fait qu'**elles présentent une viscosité à 20°C comprise entre 50 et 5.000 mPa.s, de préférence comprise entre 50 et 2.000 mPa.s., plus préférentiellement encore comprise entre 100 et 1.000 mPa.s.

3. Dispersions aqueuses d'au moins un polymère biodégradable constituées par une phase organique dispersée dans une phase aqueuse dispersante et dépourvues de composés organiques volatils, **caractérisées par le fait qu'**elles présentent :
- une viscosité à 20°C inférieure à 1.000 mPa.s., préférentiellement comprise entre 100 et 1.000 mPa.s,
- une teneur en matière sèche comprise entre 25 et 70 % en poids de préférence comprise entre 35 et 65 % en poids, plus préférentiellement encore comprise entre 40 et 60 % en poids.

4. Dispersions selon l'une quelconque des revendications 1 à 2, **caractérisées par le fait qu'**elles présentent une teneur en matière sèche comprise entre 25 et 70 % en poids, de préférence comprise entre 35 et 65 % en poids, plus préférentiellement encore comprise entre 40 et 60 % en poids.

5. Dispersions selon l'une quelconque des revendications 1 à 4, **caractérisées par le fait qu'**elles présentent une teneur en polymères biodégradables et en agent réducteur de viscosité d'au moins 80 % en poids de la matière sèche desdites dispersions aqueuses, préférentiellement d'au moins 90 % en poids, plus préférentiellement encore d'au moins 95 % en poids.

6. Dispersions selon l'une quelconque des revendications 1 à 5, **caractérisées par le fait que** le polymère biodégradable se présente sous forme amorphe ou semi-cristalline, préférentiellement sous forme amorphe.

7. Dispersions selon l'une quelconque des revendications 1 à 6, **caractérisées par le fait que** l'agent réducteur de viscosité est choisi dans le groupe des esters d'acides et d'alcools, éventuellement éthoxylés, de préférence des mono-, di- ou tri-esters d'acides organiques, de l'acide carbonique et de l'acide phosphorique, de sucres ou de polyols.

8. Dispersions selon l'une quelconque des revendications 1 à 7, **caractérisées par le fait que** l'agent réducteur de viscosité est choisi dans le groupe des éthers éventuellement éthoxylés de sucres, de polyols, notamment d'isosorbide, de glycol ou de phénol, des éther-esters de glycols ou des huiles triglycéridiques époxydées.

9. Dispersions selon l'une quelconque des revendications 1 à 8, **caractérisées par le fait que** la phase aqueuse dispersive comprend au moins un stabilisant choisi dans le groupe des polyols, des oligosaccharides et des polysaccharides issus de celluloses, d'amidons et de gommes naturelles et fermentaires natifs ou modifiés, préférentiellement par hydroxy-propylation, hydroxy-éthylation, alkylation ou alkyl succinylation, les peptides et polypeptides, les alcools polyvinyliques éventuellement modifiés.

10. Procédé de préparation de dispersions aqueuses d'au moins un polymère biodégradable constituées par une phase organique dispersée dans une phase aqueuse dispersante et dépourvues de composés organiques volatils selon l'une quelconque des revendications 1 à 9, **caractérisé par le fait qu'**il consiste à :
1) préparer la phase organique à disperser par la mise à l'état fondu du mélange de polymère biodégradable et d'agent réducteur de viscosité, à une température supérieure à la température de transition vitreuse du polymère biodégradable de manière à obtenir un mélange fondu homogène, le rapport pondéral entre polymère biodégradable et agent réducteur de viscosité étant compris entre 99,8/0,2 à 60/40, de préférence compris entre 97/3 à 70/30, plus préférentiellement compris entre 92/8 et 70/30,
2) solubiliser totalement l'agent stabilisant dans la phase aqueuse dispersante,
3) introduire simultanément et continuellement la phase aqueuse dispersante et la phase organique dispersée ainsi obtenues dans le malaxeur d'un groupe émulsifieur, en ayant réglé préalablement les débits d'introduction des deux phases de manière à ce que la phase organique dispersée représente au moins 80 % en poids de la matière sèche desdites dispersions aqueuses, préférentiellement d'au moins 90 % en poids, plus préférentiellement encore d'au moins 95 % en poids, et
4) récupérer les dispersions aqueuses ainsi obtenues.

11. Utilisation des dispersions aqueuses d'au moins un polymère biodégradable selon l'une quelconque des revendications 1 à 9 ou obtenues selon le procédé de la revendication 10 pour leurs propriétés liantes/collantes, d'imprimabilité, de dégradabilité, de résistance/tenue à l'eau, de brillance, de résistance aux huiles, de résistance aux taches et de résistance mécanique.

12. Utilisation des dispersions aqueuses d'au moins un polymère biodégradable selon l'une quelconque des revendications 1 à 9 ou obtenues selon le procédé de la revendication 10 dans les domaines des textiles, des sauces de couchage, des peintures, des colles, des enduits et ciment-colles et des enrobages/encapsulation.

## Claims

1. Aqueous dispersions of at least one biodegradable polymer comprising an organic phase dispersed in a dispersing aqueous phase and free of volatile organic compounds, **characterized in that** the said organic phase comprises:
- at least one viscosity-reducing agent with a solubility parameter of between 15 and 28 (J.cm⁻³)^{0.5}, preferably between 16 and 23 (J.cm⁻³)^{0.5} and even more preferably between 18 and 21 (J.cm⁻³)^{0.5}, and a hydrogen bonding parameter δH of between 3.5 and 15 (J.cm⁻³)^{0.5}, preferably between 4 and 13 (J.cm⁻³)^{0.5} and even more preferably between 5 and 10 (J.cm⁻³)^{0.5},
- at least one biodegradable polymer in a polymer/viscosity-reducing agent weight ratio of from 99.8/0.2 to 60/40, preferably between 97/3 and 70/30 and more preferably between 92/8 and 70/30.

2. Dispersions according to Claim 1, **characterized in that** they have a viscosity at 20°C of between 50 and 5000 mPa.s, preferably between 50 and 2000 mPa.s, even more preferably between 100 mPa.s and 1000 mPa.s.

3. Aqueous dispersions of at least one biodegradable polymer consisting of an organic phase dispersed in a dispersing aqueous phase and free of volatile organic compounds, **characterized in that** they have
- a viscosity at 20°C of less than 1000 mPa.s., preferably greater than or between 100 mPa.s and 1000 mPa.s.
- a dry matter content of between 25% and 70% by weight, preferably between 35% and 65% by weight and even more preferably between 40% and 60% by weight.

4. Dispersions according to any one of Claims 1 to 2, **characterized in that** they have a dry matter content of between 25% and 70% by weight, preferably between 35% and 65% by weight and even more preferably between 40% and 60% by weight.

5. Dispersions according to any one of Claims 1 to 4, **characterized in that** they have a content of biodegradable polymers and of viscosity-reducing agent of at least 80% by weight of the dry matter of the said aqueous dispersions, preferably at least 90% by weight and even more preferably at least 95% by weight.

6. Dispersions according to any one of Claims 1 to 5, **characterized in that** the biodegradable polymer is in amorphous or semi-crystalline form and preferably in amorphous form.

7. Dispersions according to any one of Claims 1 to 6, **characterized in that** the viscosity-reducing agent is chosen from the group of optionally ethoxylated esters of acids and of alcohols, preferably mono-, di- or triesters of organic acids, of carbonic acid and of phosphoric acid, of sugars or of polyols.

8. Dispersions according to any one of Claims 1 to 7, **characterized in that** the viscosity-reducing agent is chosen from the group of optionally ethoxylated ethers of sugars, of polyols, in particular of isosorbide, of glycol or of phenol, of glycol ether-esters or of epoxidized triglyceride oils.

9. Dispersions according to any one of Claims 1 to 8, **characterized in that** the dispersing aqueous phase comprises at least one stabilizer chosen from the group of polyols, oligosaccharides and polysaccharides derived from celluloses, starches and natural and fermenting gums, in native form or modified, preferably by hydroxy-propylation, hydroxy-ethylation, alkylation or alkyl succinylation, peptides and polypeptides, and optionally modified polyvinyl alcohols.

10. Process for preparing aqueous dispersions of at least one biodegradable polymer consisting of an organic phase dispersed in a dispersing aqueous phase and free of volatile organic compounds, according to any one of Claims 1 to 9, **characterized in that** it consists in:
1) preparing the organic phase to be dispersed by melting the blend of biodegradable polymer and of viscosity-reducing agent, at a temperature above the glass transition temperature of the biodegradable polymer so as to obtain a homogeneous melt, the weight ratio between the biodegradable polymer and the viscosity-reducing agent being between 99.8/0.2 and 60/40, preferably between 97/3 and 70/30 and more preferably between 92/8 and 70/30,
2) totally dissolving the stabilizer in the dispersing aqueous phase,
3) simultaneously and continuously introducing the dispersing aqueous phase and the dispersed organic phase thus obtained into the blender of an emulsifying unit, the rates of introduction of the two phases having been adjusted beforehand such that the dispersed organic phase represents at least 80% by weight of the dry matter of the said aqueous dispersions, preferably at least 90% by weight and even more preferably at least 95% by weight, and
4) recovering the aqueous dispersions thus obtained.

11. Use of the aqueous dispersions of at least one biodegradable polymer according to any one of Claims 1 to 9 or obtained according to the process of Claim 10 for their binding/tacky, printability, degradability, water resistance/behaviour, gloss, oil resistance, stain resistance and mechanical strength properties.

12. Use of the aqueous dispersions of at least one biodegradable polymer according to any one of Claims 1 to 9 or obtained according to the process of Claim 10 in the fields of textiles, coating fluids, paints, adhesives, renderings and mortar fixatives and coatings/encapsulation.

## Patentansprüche

1. Wässrige Dispersionen aus mindestens einem bioabbaubaren Polymer, umfassend eine in einer wässrigen dispergierenden Phase dispergierte organische Phase und ohne flüchtige organische Verbindungen, **dadurch gekennzeichnet, dass** die genannte organische Phase umfasst:
- mindestens ein Viskositätserniedrigungsmittel mit einem Löslichkeitsparameter zwischen 15 und 28 (J x cm⁻³)^{0,5} und vorzugsweise zwischen 16 und 23 (J x cm⁻³)^{0,5} und ganz besonders bevorzugt zwischen 18 und 21 (J x cm⁻³)^{0,5} und mit einem Wasserstoffbindungsparameter dH zwischen 3,5 und 15 (J x cm⁻³)^{0,5} und vorzugsweise zwischen 4 und 13 J x cm⁻³)^{0,5} und ganz besonders bevorzugt zwischen 5 und 10 (J x cm⁻³)^{0,5} und
- mindestens ein bioabbaubares Polymer in einem Gewichtsverhältnis Polymer/Viskositätserniedrigungsmittel von 99,8/0,2 bis 60/40, bevorzugt zwischen 97/3 und 70/30 und ganz besonders bevorzugt zwischen 92/8 und 70/30.

2. Wässrige Dispersionen gemäß Anspruch 1, **dadurch gekennzeichnet, dass** sie eine Viskosität bei 20°C zwischen 50 und 5.000 mPa.s, vorzugsweise zwischen 50 und 2.000 mPa.s und ganz besonders bevorzugt zwischen 100 und 1.000 mPa.s aufweisen.

3. Wässrige Dispersionen aus mindestens einem bioabbaubaren Polymer, die aus einer in einer wässrigen dispergierenden Phase dispergierten organischen Phase zusammengesetzt sind und keine flüchtigen organischen Verbindungen enthalten, **dadurch gekennzeichnet, dass** sie aufweisen:
- eine Viskosität bei 20°C von weniger als 1.000 mPa x s und bevorzugt zwischen 100 und 1.000 mPa x s und
- einen Trockenmassegehalt zwischen 25 und 70 Gew.-%, vorzugsweise zwischen 35 und 65 und ganz besonders bevorzugt zwischen 40 und 60 Gew.-%.

4. Dispersionen gemäß Anspruch 1 oder 2, **dadurch gekennzeichnet, dass** sie einen Trockenmassegehalt zwischen 25 und 70 Gew.-%, vorzugsweise zwischen 35 und 65 Gew.-% und ganz besonders bevorzugt zwischen 40 und 60 Gew.-% aufweisen.

5. Dispersionen gemäß einem der Ansprüche 1 bis 4, **dadurch gekennzeichnet, dass** sie einen Gehalt an bioabbaubaren Polymeren und an Viskositätserniedrigungsmittel von mindestens 80 Gew.-% der Trockenmasse der genannten wässrigen Dispersionen, bevorzugt von mindestens 90 GEw.-% und ganz besonders bevorzugt von mindestens 95 Gew.-% aufweisen.

6. Dispersionen gemäß einem der Ansprüche 1 bis 5, **dadurch gekennzeichnet, dass** das bioabbaubare Polymer in amorpher oder halbkristalliner Form und bevorzugt in amorpher Form vorliegt.

7. Dispersionen gemäß einem der Ansprüche 1 bis 6, **dadurch gekennzeichnet, dass** das Viskositätserniedrigungsmittel aus der Gruppe aus Estern von Säuren und Alkoholen, bevorzugt gegebenenfalls ethoxylierten Mono-, Di- oder Triestern organischer Säuren, Carbon- und Phosphorsäure, aus Zuckern oder Polyolen, ausgewählt ist.

8. Dispersionen gemäß einem der Ansprüche 1 bis 7, **dadurch gekennzeichnet, dass** das Viskositätserniedrigungsmittel aus der Gruppe gegebenenfalls ethoxylierter Ether von Zuckern, Polyolen, insbesondere von Isosorbid, Glykol oder Phenol, aus Glykoletherestern oder epoxidierten Triglyceridölen ausgewählt ist.

9. Dispersionen gemäß einem der Ansprüche 1 bis 8, **dadurch gekennzeichnet, dass** die wässrige dispersive Phase mindestens ein Stabilisiermittel umfasst, ausgewählt aus der Gruppe aus Polyolen, Oligosacchariden und Polysacchariden aus Cellulosen, Stärken und aus natürlichen und fermentären nativen oder bevorzugt durch Hydroxypropylierung, Hydroxyethylierung, Alkylierung oder Alkylsuccinylierung modifizierten Gummiprodukten, aus Peptiden und Polypeptiden und aus gegebenenfalls modifizierten Polyvinylalkoholen.

10. Verfahren zur Zubereitung wässriger Dispersionen gemäß einem der Ansprüche 1 bis 9 aus mindestens einem bioabbaubaren Polymer, die aus einer in einer wässrigen dispergierenden Phase dispergierten organischen Phase zusammengesetzt sind une keine flüchtigen organischen Verbindungen enthalten, **dadurch gekennzeichnet, dass** es darauf beruht, dass man:
1) eine zu dispergierende organische Phase durch Schmelzen der Mischung aus bioabbaubarem Polymer und dem Viskositätserniedrigungsmittel bei einer Temperatur über der Glasübergangstemperatur des bioabbaubaren Polymer so zubereitet dass man eine geschmolzene homogene Mischung erhält, wobei das Gewichtsverhältnis zwischen dem bioabbaubaren Polymer und dem Viskositätserniedrigungsmittel zwischen 99,8/0,2 bis 60/40, bevorzugt zwischen 97/3 bis 70/30 und ganz besonders bevorzugt zwischen 92/8 und 70/30 liegt,
2) das Stabilisiermittel völlig in der wässrigen dispergierenden Phase solubilisiert,
3) gleichzeitig und kontinuierlich die so erhaltene wässrige dispergierende Phase und die organische dispergierte Phase in den Kneter einer Emulgatorgruppe einbringt, wobei vorab die Einbringmengen der 2 Phasen eingestellt worden sind, und zwar so, dass die organische dispergierte Phase mindestens 80 Gew.-% der Trockenmasse der genannten wässrigen Dispersionen, bevorzugt mindestens 90 Gew.-% und noch bevorzugter mindestens 95 Gew.-% ausmacht, und man
4) die so erhaltenen wässrigen Dispersionen gewinnt.

11. Verwendung der wässrigen Dispersionen gemäß einem der Ansprüche 1 bis 9, oder erhalten gemäß dem Verfahren des Anspruchs 10, aus mindestens einem bioabbaubaren Polymer im Hinblick auf deren bindende/klebende Eigenschaften, Bedruckbarkeit, Abbaubarkeit, Beständigkeit/Wasserverhalten, Glanz, Ölbeständigkeit, Fleckenvermeidung und mechanischen Beständigkeit.

12. Verwendung der wässrigen Dispersionen gemäß einem der Ansprüche 1 bis 9, oder erhalten gemäß dem Verfahren des Anspruchs 10, aus mindestens einem bioabbaubaren Polymer auf den Gebieten von Textil, Beschichtungen, Anstrichen, Klebstoffen, Überzügen und Zementklebern und von Umhüllungen/Verkapselungen.
